# EUROPÄISCHE PATENTANMELDUNG

(11) **EP 2 278 139 A2**
(43) Veröffentlichungstag der Anmeldung: **26.01.2011**
(21) Anmeldenummer: 10007473.1
(22) Anmeldetag: 20.07.2010
(51) Int. Cl.: F02B 29/08, F02D 9/12

(54) **Injektorventil, insbesondere zur Druckluftaufladung einer Brennkraftmaschine**

(30) Priorität: 24.07.2009 DE 102009034684
(71) Anmelder: Voith Patent GmbH, 89522 Heidenheim (DE)
(72) Erfinder: Nickl, Jörg, Dr., 01744 Malter (DE)
(74) Vertreter: Weitzel, Wolfgang

(57) **Zusammenfassung**

Die Erfindung betrifft ein Injektorventil (29) zum Einbringen eines Ergänzungsmediums in einem Strömungskanal (1)
- mit einem Gehäuse (22), das wenigstens einen ersten Einlass (23) für ein erstes Strömungsmedium und einen zweiten Einlass (3) für das Ergänzungsmedium sowie einen Auslass (25) für das erste Strömungsmedium und das Ergänzungsmedium aufweist;
- mit einer Düse (5) in strömungsleitender Verbindung mit dem zweiten Einlass (3), über welche das Ergänzungsmedium in den Strömungskanal (1) injiziert wird.
- in dem Strömungskanal in Strömungsrichtung hinter der Düse ist ein Ventilkörper positioniert, der zwischen einer ersten inaktiven Position und einer zweiten aktiven Position verlagerbar ist, wobei der Ventilkörper In der Inaktiven Position einen vergleichsweise größeren Strömungsquerschnitt des Strömungskanals hinter der Düse realisiert und in der aktiven Position einen vergleichsweise kleineren, düsenförmigen Strömungsquerschnitt hinter der Düse realisiert.

## Beschreibung

Die vorliegende Erfindung betrifft im Allgemeinen ein Injektorventil, im Einzelnen mit den Merkmalen gemäß dem Oberbegriff von Anspruch 1, und speziell ein Injektorventil zur Verwendung bei der Druckluftaufladung einer Brennkraftmaschine, Insbesondere In einem Kraftfahrzeug, beziehungsweise ein Aufladesystem für eine solche Brennkraftmaschine.

Das Dokument US 3 020 901 beschreibt ein Aufladesystem für eine Brennkraftmaschine, bei welcher die Brennkraftmaschine über einen Verdichter eines Turboladers aufgeladen wird. In Strömungsrichtung der Frischluft hinter dem Verdichter ist eine Druckluftzufuhr vorgesehen, über welche Druckluft aus einem Luftreservoir In den verdichteten Frischluftstrom einleitbar ist, um die Turboaufladung zu unterstützen. An der Mündungsstelle ist eine Düse für die Druckluft aus dem Luftreservoir als Ergänzungsmedium zu dem Frischluftstrom vorgesehen, über welche die Druckluft in den Strömungskanal der Frischluft zur Brennkraftmaschine eingedüst wird. In Strömungsrichtung vor der Düse ist ein wahlweise betätigbares Ventil vorgesehen, das den Strömungsquerschnltt für die Druckluft abschließt oder freigibt, und zwar in Abhängigkeit eines Gashebels, Die aus dem genannten Dokument bekannten Merkmale sind im Oberbegriff des Anspruches 1 sowie des Anspruches 15 zusammengefasst.

Gemäß dem Stand der Technik wird demnach die Drucklufteinblasung, um den anfänglichen Luftmangel aufgrund der Trägheit des Turboladers bei einer plötzlichen Laststeigerung der Brennkraftmaschine, was sich in einer größeren Zeitspanne bis zum Erreichen des notwendigen Ladedrucks und einer unvollständigen Verbrennung äußert, zu vermindern, einfach durch Drosselentspannung der Druckluft aus einem Druckluftbehälter des Fahrzeugs und durch Beschleunigen der Druckluft mittels einer Düse realisiert. Der Massenstrom der Druckluft wird dabei über das Ventil in der Druckluftieitung vor der Mischstelle bestimmt, welches entsprechend betätigt werden muss.

Ferner schlägt das Dokument WO 2006/089779 A1 vor, bei einer entsprechenden ergänzenden Druckluftaufladung einer Brennkraftmaschine nicht nur in der Druckluftleitung eine Mengenregelvorrichtung zum Absperren und Freigeben der Druckluftzufuhr in die Frischluftleitung hinter dem Verdichter eines Abgasturboladers vorzusehen, sondern in der Frischluftleitung selbst,vor dem Einspeisungspunkt der Druckluftleitung eine wahlweise verdrehbare Klappe anzuordnen, die durch Verdrehen mehr oder minder geöffnet und geschlossen werden kann, um den Strömungsquerschnitt zwischen der Druckluftelrispelsung und dem Verdichter des Turboladers wahlweise mehr oder minder zu verschließen. Durch Vorsehen einer Vielzahl von Sensoren und einer Steuereinheit wird ermöglicht, festzustellen, ob eine zusätzliche Lufteinblasung durchgeführt werden soll und mittels eines Steuerprogramms in der Steuereinrichtung ein Schließen der Klappe in der Frischluftleitung und ein Freigeben der Drucklufteinblesung aus dem Druckluftbehälter bewirkt werden soll. Wenn mittels der Sensoren und der Steuereinheit festgestellt worden ist, dass der Turbolader ausreichend hochgefahren worden ist, kann durch Schließen der Mengenregelvorrichtung in der Druckluftleitung die Drucklufteinspeisung beendet und die Klappe in der Frlschluftletung wieder geöffnet werden.

Grundsätzlich benötigen derartige Systeme relativ viel Druckluft, die sowieso schon Mangelware In heutigen Kraftfahrzeugen, insbesondere Nutzfahrzeugen ist und außerdem mit hohem energetischen Aufwand bereitgestellt werden muss. In der Regel wird somit die Druckluft zunächst auf ca. 10 - 12 bar Überdruck gebracht, um dann wieder auf das Ladedruckniveau von ca. 0,5 - 1,5 bar Überdruck abgedrosselt zu werden. Außerdem sind die bekannten Systeme aufwändig und benötigen eine umfangreiche Steuerung, die aufgrund ihrer Komplexität und der notwendigen Genauigkeit anfällig für Fehler ist oder insbesondere nach einer längeren Betriebsdauer nicht mehr die optimale Aufladung der Brennkraftmaschine ermöglicht.

Schließlich führen die bekannten Systeme zu einem relativen Druckverlust in der Frischluftleitung einer turboaufgeladenen Brennkraftmaschine im Vergleich zu Systemen ohne ergänzender Druckluftaufladung durch Injizieren von Druckluft in die Frischluftleitung.

Der vorliegenden Erfindung liegt die Aufgabe zugrunde, ein Injektorventil zum Einbringen eines Ergänzungsmedlums in einen Strömungskanal, insbesondere zur Verwendung in einem Frischluftstrom einer aufgeladenen Brennkraftmaschine vor oder hinter dem Verdichter eines Turboladers sowie ein entsprechendes Aufladesystem für eine Brennkraftmaschine anzugeben, welches gegenüber den genannten Ausführungsformen verbessert ist und insbesondere zu einer Druckluftelnsparung und druckverlustärmeren Strömung in der Frischluftleitung führt.

Die erfindungsgemäße Aufgabe wird durch ein Injektorventil mit den Merkmalen von Anspruch 1 gelöst. In den abhängigen Ansprüchen sind vorteilhafte und besonders zweckmäßige Ausgestaltungen der Erfindung angegeben. Anspruch 15 beschreibt ein erfindungsgemäßes Aufladesystem.

Das erfindungsgemäße Injektorventil zum Einbringen eines Ergänzungsmediums in einen Strömungskanal weist ein Gehäuse mit wenigstens einem ersten Einlass für ein erstes Strömungsmedium und einem zweiten Einlass für das Ergänzungsmedium sowie einen Auslass für das erste Strömungsmedium und das Ergänzungsmedium auf. Bei Verwendung in einem Aufladesystem einer Brennkraftmaschine kann an dem ersten Einlass beispielsweise der Verdichter eines Abgasturboladers derart angeschlossen sein, dass- gegebenenfalls unter Zwischenschaltung weiterer Aggregate, beispielsweise eines Ladeluftkühlers - der Frischluftstrom aus dem Verdichter In das InjBktorventil eingeleitet wird. An dem zweiten Einlass kann dann ein Druckluftsystem beziehungsweise die Druckluftzufuhr aus einem Druckluftsystem derart angeschlossen sein, dass Druckluft in den Strömungskanal für die Frischluft eingebracht beziehungsweise "injiziert" wird. Der Auslass ist bei einem solchen System mit dem Frischlufteinlass der Brennkraftmaschine, wiederum insbesondere unter Zwischenschaltung weiterer Aggregate, beispielsweise einer Sammelleitung, verbunden, sodass die Brennkraftmaschine mittels des Abgasturboladers und ergänzend mittels der Druckluft aus dem Druckluftsystem aufgeladen werden kann, was vom Fachmann auch als Boostern bezeichnet wird.

Selbstverständlich ist es auch möglich, das Injektorventil in Strömungsrichtung der Frischluft vor dem Verdichter des Abgasturboladers oder zwischen zwei Verdichtern eines Abgasturboladers und/oder Turbocompoundsystems anzuordnen, sodass dementsprechend unverdichtete oder in einer ersten Stufe verdichtete Frischluft in den ersten Einlass eingeleitet wird und der Auslass zu einem Verdichter zur Aufladung der Brennkraftmaschine führt.

Obwohl das erfindungsgemäße Injektorventil vorliegend anhand eines Aufladesystems für eine Brennkraftmaschine, insbesondere eines Kraftfahrzeugs, besonders Nutzfahrzeugs, wie Lkw oder Schienenfahrzeug, beschrieben wird, ist es auch in anderen Systemen einsetzbar, bei welchen ein Ergänzungsmedium in einen Strömungskanal für ein erstes Strömungsmedium wahlweise eingebracht werden soll und eine strömungsgünstige und druckverlustarme Injizierung vorteilhaft ist.

Das erfindungsgemäße Injektorventil weist ferner eine Düse in strömungsleitender Verbindung mit dem zweiten Einlass auf, über welche das Ergänzungsmedium in den Strömungskanal injiziert wird. Beispielsweise kann zwischen der Düse und dem zweiten Einlass ein Sammelraum, insbesondere eine Ringkammer vorgesehen sein, um das über den zweiten Einlass eingeleitete Ergänzungsmedium über dem Umfang des Strömungskanals zu verteilen, bevor es über die Düse in den Strömungskanal eingeleitet wird. Dementsprechend ist die Düse vorteilhaft als Ringdüse ausgeführt oder es ist eine Vielzahl von über dem Umfang des Strömungskanals verteilten, parallelgeschalteten Düsen vorgesehen.

Erfindungsgemäß ist in dem Strömungskanal in Strömungsrichtung des Ergänzungsmediums bezlehungsweise des ersten Strömungsmediums hinter der wenigstens einen Düse ein Ventilkörper positioniert, der zwischen einer ersten inaktiven Position und einer zweiten aktiven Position verlagerbar ist. Die Bezeichnung "hinter der Düse" schließt dabei nicht aus, dass der Ventilkörper sich Im Strömungskanal, insbesondere in seiner aktiven Position, in Axialrichtung entgegen der Strömungsrichtung des ersten Strömungsmediums über die Düse hinaus erstreckt. Wichtig ist nur die erfindungsgemäße Veränderung des Querschnitts des Strömungskanals in Strömungsrichtung des ersten Strömungsmediums und/oder des Ergänzungsmediums hinter der Injektionsstelle mit der Düse.

So realisiert nämlich der Ventilkörper in der inaktiven Position einen vergleichsweise größeren Strömungsquerschnitt des Strömungskanals hinter der Düse als in der aktiven Position. In der aktiven Position realisiert er erfindungsgemäß entsprechend einen vergleichsweise kleineren Strömungsquerschnitt hinter der Düse, welcher zudem düsenförmig gestaltet ist, das heißt welcher einen im Verlauf der Strömung abnehmenden Querschnitt bis hin zu einem Mindestquerschnitt am Ende des düsenförmigen Strömungsquerschnittes - vorliegend auch Mischdüse genannt- aufweist.

Durch den erfindungsgemäß vorgesehenen Ventilkörper im Strömungskanal wird erreicht, dass in der inaktiven Position aufgrund des vergleichsweise größeren Strömungsquerschnittes das erste Strömungsmedium, beispielsweise Frischluft aus einem oder zu einem Turboladerverdichter, verlustarm strömen kann. In der aktiven Position hingegen wird hinter der Düse zum Injizieren des Ergänzungsmediums eine zusätzliche Mischdüse ausgebildet, an weiche sich vorteilhaft, insbesondere unmittelbar, ein Diffusor anschließen kann, die zum einen ein Mitreißen des ersten Strömungsmediums aus dem ersten Einlass bewirkt und ferner durch den die Diffusor eine Drucksteigerung bewirkt, wodurch Ergänzungsmedium eingespart wird. Beim Einblasen von Druckluft hinter dem Verdichter eines Turboladers kann die Einsparung bis zu 40% der Druckluft im Vergleich zu Systemen gemäß dem Stand der Technik betragen.

Aufgrund dessen, dass das erste Strömungsmedium, insbesondere Frischluft aus dem Verdichter eines Turboladers, durch das Injizieren des Ergänzungsmediums, insbesondere Druckluft aus einem Druckluftsystem, insbesondere Fahrzeugdruckluftsystam, mittels einer ersten Düse in den Strömungskanal und durch Ausbilden einer zweiten Düse beziehungsweise eines düsenförmigen Strömungsquerschnittes hinter der Düse im Strömungskanal mitgerissen wird, kann vorteilhaft auf Rückschlagventile oder Absperrklappen Im Strömungskanal des ersten Strömungsmediums vor dem Injektorventil oder im Injektorventil verzichtet werden.

Besonders vorteilhaft ist die Düse, über welche das Ergänzungsmedium in den Strömungskanal injiziert wird, derart ausgerichtet, dass das Ergänzungsmedium weitgehend oder vollständig am Ventilkörper vorbei, insbesondere außen am Ventilkörper vorbei, geleitet wird, wenn sich dieser in seiner Inaktiven Position befindet, und sich infolgedessen in Strömungsrichtung hinter dem Ventilkörper im Strömungskanal ein Überdruck aufbaut, der den Ventilkörper in Richtung der Düse verlagert, beispielsweise verschiebt oder verschwenkt, bis dieser seine aktive Position erreicht hat. Für diese Verlagerung muss demnach das Ergänzungsmedium derart am Ventilkörper vorbeigeleitet werden, dass ein auf den Ventilkörper durch das Ergänzungsmedium im Sinne eines Wegbewegens von der Düse aufgebrachter Staudruck kleiner ist als der durch das Ergänzungsmedium hinter dem Ventilkörper aufgebrachte Staudruck. Dies kann beispielsweise dadurch erreicht werden, dass die Injektionsrichtung der Düse derart ausgeführt ist, insbesondere gegenüber der Gehäuselängsachse nach außen abgewinkelt ist, dass der injizierte Strahl des Ergänzungsmediums nicht oder nicht vollständig, insbesondere nur im äußerten Bereich auf den Ventilkörper auftrifft und somit, wie dargestellt, im Wesentlichen an diesem vorbeigeleitet wird. Ergänzend kann die Oberfläche des Ventilkörpers, welche dem injizierten Strahl des Ergänzungsmediums gegenübersteht, derart strömungsgünstig ausgeführt sein, dass diese ein druckärmes Überströmen des Ergänzungsmedlums begünstigt.

Die Düse, mittels welcher das Ergänzungsmedium in den Strömungskanal Injiziert wird, kann beispielsweise als Lavaldüse ausgeführt sein, das heißt als Düse, die sich aus einem Düsenabschnitt mit abnehmendem Querschnitt und einem Diffusorabschnitt mit zunehmendem Querschnitt zusammensetzt. Hierdurch wird eine besonders effektive Entspannung des Ergänzungsmediums erreicht, dass dadurch mit Überschallgeschwindigkeit in den Stramungskanal injiziert wird.

Besonders vorteilhaft wird der düsenförmige Strömungsquerschnitt hinter der Düse zum Injizieren des Ergänzungsmedlums und insbesondere der Diffusor hinter diesem düsenförmigen Querschnitt durch den Ventilkörper und eine innere Oberfläche des Gehäuses begrenzt, wobei gemäß einer Ausführungsform ausschließlich der Ventilkörper und die innere Oberfläche des Gehäuses den düsenförmigen Strömungsquerschnitt und Insbesondere den sich anschließenden Diffusor begrenzen.

Der Ventilkörper kann beispielsweise eine abgerundete oder runde Strömungsoberfläche aufweisen. Besonders vorteilhaft ist der Ventilkörper als Kugel, insbesondere als Hohlkugel ausgeführt.

Ein erfindungsgemäßes Aufladesystem für eine Brennkraftmaschine, insbesondere für ein Kraftfahrzeug, umfässt einen Abgasturbolader mit einer in einem Abgasstrom der Brennkraftmaschine angeordneten, vom Abgas in eine Drehbewegung versetzbare Turbine und einem in einem Frischluftstrom zur Brennkraftmaschine angeordneten Verdichter, der durch die Turbine antreibbar ist, um den Frischluftstrom zu verdichten und dadurch die Brennkraftmaschine aufzuladen. Im Frischluftstrom ist vor oder hinter dem Verdichter eine Mündung einer Druckluftzufuhr vorgesehen, mittels welcher Druckluft aus einem Druckluftsystem, insbesondere Fahrzeugdruckluftsystem, zur zusätzlichen Aufladung der Brennkraftmaschine, insbesondere dann, wenn, wie beschrieben, die Last beziehungsweise Leistung der Brennkraftmaschine durch Kraftstoffzufuhr plötzlich gesteigert wird und der Turbolader allein zu wenig verdichtete Frichshluft liefert.

Das erfindungsgemäße Aufladesystem weist ferner, wie zuvor dargestellt, ein erfindungsgemäß ausgeführtes Injektorventil an der Mündungsstelle der Druckluftzufuhr im Frischluftstrom auf.

Die Erfindung soll nachfolgend anhand eines Ausführungsbeispiels mit einem erfindungsgemäßen Injektorventll In einem Aufladasystem einer Brennkraftmaschine exemplarisch dargestellt werden, wobei die im Folgenden beschriebenen verschiedenen Merkmale nicht zwingend in Kombination, sondern auch unabhängig voneinander einzeln vorgesehen werden können.

Es zeigen:
- Figur 1: ein Erfindungsgemäß ausgeführtes Aufladesystem für eine Brennkraftmaschine;
- Figur 2: das Injektorventil aus dem Aufladesystem gemäß der Figur 1,

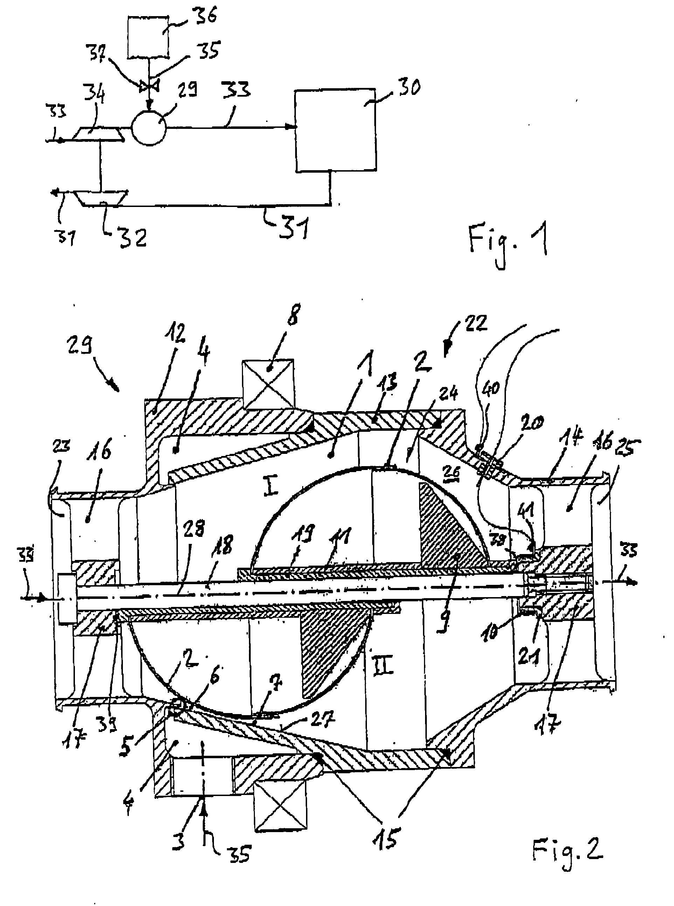

In der Figur 1 erkennt man eine Brennkraftmaschine 30, die einen Abgasstrom 31 erzeugt, in welchem die Turbine 32 eines Abgasturboladers angeordnet ist und durch den Abgasstrom 31 angetrieben wird. Der Brennkraftmaschine 30 wird ein Frischluftstrom 33 zugeleitet, in welchem ein Verdichter 34, der durch die Turbine 32 antreibbar ist, angeordnet ist, um den Frischluftstrom 33 zu verdichten und dadurch die Brennkraftmaschine 30 aufzuladen.

In Strömungsrichtung des Frischluftstromes 33 hinter dem Verdichter 34 ist ein Injektorventil 29 angeordnet, mittels welchem Druckluft aus einem Fahrzeugdruckluftsystem 36 In den Frischluftstrom 33 beziehungsweise In die Leitung des Frischluftstromes 33 Injiziert wird. Dementsprechend ist das Fahrzeugdruckluftsystem 36 über eine Druckluftzufuhr 35 mit dem Injektorventil 29 verbunden.

In der Figur 2 ist das Injektorventil 29 nun im Detail und mit einer Vielzahl möglicher optionaler Merkmale dargestellt. Das Injektorventil 29 weist ein Gehäuse 22 auf, das einen Strömungskanal 1 für den Frischluftstrom 33 in Umfangsrichtung umschließt. Vorliegend ist das Gehäuse 22 aus drei Gehäuseteilen 12, 13, 14 zusammengesetzt, die mit zwei O-Ringen 15 gegeneinander abgedichtet sind. Selbstverständlich wären auch andere Gehäuseformen und/oder Aufteilungen möglich.

Der Strömungsquerschnitt 1 weist einen kreisförmigen Querschnitt auf und ist in seinem Außendurchmesser im Bereich der axialen Mitte des Gehäuses 22 gegenüber den beiden axialen Enden des Gehäuses 22 erweitert. Das erste axiale Ende des Gehäuses 22 beziehungsweise des Strömungskanals wird durch den ersten Einlass 23 ausgebildet, und das zweite axiale Ende des Gehäuses 22 beziehungsweise des Strömungskanals 1 wird durch den Auslass 25 ausgebildet.

Im Bereich der im Außendurchmesser erweiterten Mitte des Strömungskanals 1 ist ein Ventilkörper 24 entlang der Gehäuselängsachse 28 verschiebbar angeordnet. Vorliegend ist der Ventilkörper 24 als Hohlkugel 2 ausgeführt.

Auf der Einlassseite des Gehäuses 22 in Strömungsrichtung hinter dem ersten Einlass 23 ist ein zweiter Einlass 3 vorgesehen, an welchem die Druckluftzufuhr 35 angeschlossen ist. Die Druckluft aus der Druckluftzufuhr 35 gelangt vom zweiten Einlass 3 zunächst in eine Ringkammer 4, in welcher sie außen über dem Umfang des Strömungskanals 1 verteilt wird, bevor sie über die Düse 5, vorliegend als Ringdüse ausgeführt, in den Strömungskanal 1 injiziert wird.

Das Zuführen von Druckluft zum zweiten Einlass 3 kann durch Schließen eines entsprechenden Absperrorgans unterbrochen werden, siehe beispielsweise das Ventil, hier Magnetventil 37, In der Figur 1.

Wenn nun im Fall des "Boosterns" Druckluft in den zweiten Einlass 3 eingeleitet wird, gemäß der Figur 1 durch Öffnen des Magnetventils 37, strömt die Druckluft von dem zweiten Einlass 3 mit hohem Überdruck In die Ringkammer 4 und aus dieser in die Düse 5, die vorliegend als Lavaldüse (Düse mit anschlleßendem Diffusor) zwecks optimaler Überschallentspannung ausgeführt ist. Zu Beginn, wenn sich der Ventilkörper 24, hier die Hohlkugel 2 noch in ihrer inaktiven Position I, hier dargestellt oberhalb der Gehäuselängsachse 28, befindet, vorliegend an einem ausgangsseitigen Anschlag 38 anliegt, strömt die Druckluft in Form eines Treibstrahls bereits mit Überschallgeschwindigkeit aus der Düse 5 in den Strömungskanal 1, wird durch die gewählte Ausrichtung der Düse 6 außen an der Hohlkugel 2 vorbeigelenkt und gelangt schließlich hinter die Hohlkugel 2, wodurch sich zunächst ein kleines Druckgefälle über der Hohlkugel 2 entgegen der Strömungsrichtung aufbaut. Dieses Druckgefälle bewirkt, dass sich die Hohlkugel 2 (allgemein der Ventilkörper 24) entgegen der Strömungsrichtung (hier nach links) bewegt. Bis zum linken Anschlag 39 wird der Treibstrahl der injizierten Druckluft immer mehr Luft aus dem ersten Einlass 23, vorliegend demnach aus dem Verdichter 34 des Abgasturboladers mitreißen und diesen so druckentlasten. In der aktiven Position II (unterhalb der Gehäuselängsachse 28 dargestellt), insbesondere positioniert am Anschlag 39, bildet sich dann der gezeigte düsenförmige Querschnitt 6 mit anschließendem Diffusor 7 aus, der für eine Drucksteigerung verantwortlich ist. Vorliegend ist sowohl der düsenförmige Querschnitt 6 als ringförmige Mischdüse, als auch der Diffusor 7 ringförmig entlang des äußeren Umfangs der Hohlkugel 2 ausgeführt.

Wie man sieht, wird in dem gezeigten Ausführungsbeispiel sowohl der ringförmige Strömungsquerschnitt 6 als auch der Diffusor 7 ausschließlich durch die äußere Oberfläche des Ventilkörpers 24, hier der Hohlkugel 2, und die innere Oberfläche 27 des Gehäuses 1 gebildet beziehungsweise begrenzt.

Für den Fall, dass sich die Hohlkugel 2 nicht schnell genug nach links In Ihre aktive Position II bewegt, kann zeitgleich mit dem Öffnen des Magnetventils 37 (oder allgemein eines Absperrorgans) eine elektromagnetische Spule 8 zugeschaltet werden, um die Hohlkugel 2 in ihre aktive Position II zu verschieben. Für diesen Fall ist vorteilhaft eine ferromagnetische Eiseneinlage 9 innerhalb der Hohlkugel 2 oder an dieser vorgesehen.

Selbstverständlich ist es alternativ auch möglich, die Hohlkugel 2 selbst aus ferromagnetischem Material auszubilden oder einen anderen Aktuator zum Verbringen des Ventilkörpers 24 aus seiner inaktiven Position I in seine aktive Position II und/oder umgekehrt vorzusehen.

Am Ende des "Boosterns", wenn das Magnetventil 37 geschlossen und gegebenenfalls die Spule 8 abgeschaltet wird, baut sich über der Hohlkugel 2 ein Druckgefälle im Strömungskanal 1 In Strömungsrichtung auf, das ein Bewegen der Hohlkugel 2 In Ihre inaktive Position I, somit in die sogenannte Durchströmstellung, in welcher ein vergleichsweise großer Strömungsquerschnitt für den Frischluftstrom 33 zur Verfügung gestellt wird, bewirkt. Dieser vergleichsweise größere Strömungsquerschnitt ist vorliegend mit 26 bezeichnet.

Als Option, insbesondere im Falle der spulenlosen Ausführung kann am rechten Anschlag 38 ein Signalgeber, insbesondere in Form eines ein elektrisches Signal erzeugenden Kontaktes 10, vorgesehen sein, der in der inaktiven Position I des Ventilkörpers 24, hier der Hohlkugel 2, betätigt wird, Insbesondere dadurch, dass der Ventilkörper 24 an dem Anschlag 38 anschlägt (den Kontakt schließt) und ein Signal abgibt und somit quasi den Druckausgleich zwischen dem Druck der zugeführten Frischluft und dem Druck der Druckluft meldet, was zum Beispiel das Schließen des Magnetventils 37 veranlassen kann. In einem solchen Fall kann vorteilhaft die Eiseneinlage 9 innerhalb der Hohlkugel 2 eingespart werden, da diese nur unnötig die Trägheit der Kugel erhöht.

In der gezeigten Ausführungsform wird der elektrische Signalgeber einfach durch einen ersten elektrischen Anschluss 40 am Gehäuse 1 und einen zweiten elektrischen Anschluss 41 im Bereich des Anschlags 38 ausgebildet, wobei der zweite elektrische Anschluss 41 gegenüber dem Gehäuse 1 hier mittels einer elektrisch isolierenden Zwischenhülse 21 und einer elektrisch isolierenden Kabeldurchführung 20 isoliert Ist. Da der Ventilkörper 24 elektrisch leitend mit dem Gehäuse 1 verbunden ist, wird der Stromkreis immer dann geschlossen, wenn der Ventilkörper 24 am Anschlag 38 mit dem zweiten elektrischen Anschluss 41 anschlägt.

In der gezeigten Ausführungsform sind im Bereich des ersten Einlasses 23 und im Auslass 25 Naben 17 angeordnet, die durch Rippen 16 im Gehäuse 1 gehalten werden. Die Naben 17 tragen einen Gleitsteg, auf welchem der Ventilkörper 24 in Richtung der Gehäuselängsachse 28 gleltet, hier In Form einer Zentralschraube 18, die in Bohrungen in den beiden Naben 17 gehalten wird und das Gehäuse zusammenhält.

Damit der Ventilkörper 24, hier die Hohlkugel 2, leichter gleitet, kann, wie dargestellt, eine Gleithülse 19 vorgesehen sein. Ferner verleiht in dem gezeigten Ausführungsbeispiel eine Distanzhülse 11 der Hohlkugel 2 die notwendige Stabilität, siehe Figur 2.

## Patentansprüche

1. Injektorventil zum Einbringen eines Ergänzungsmediums in einem Strömungskanal (1)
1.1 mit einem Gehäuse (22), das wenigstens einen ersten Einlass (23) für ein erstes Strömungsmedium und einen zweiten Einlass (3) für das Ergänzungsmedium sowie einen Auslass (25) für das erste Strömungsmedium und das Ergänzungsmedium aufweist;
1.2 mit einer Düse (5) in strömungsleitender Verbindung mit dem zweiten Einlass (3), über welche das Ergänzungsmedium in den Strömungskanal (1) injiziert wird;
**dadurch gekennzeichnet, dass**
1.3 in dem Strömungskanal (1) in Strömungsrichtung hinter der Düse (5) ein Ventilkörper (24) positioniert ist, der zwischen einer ersten inaktiven Position (I) und einer zweiten aktiven Position (II) verlagerbar Ist, wobei der Ventilkörper (24) in der inaktiven Position (I) einen vergleichsweise größeren Strömungsquerschnitt (26) des Strömungskanals (1) hinter der Düse (5) realisiert und in der aktiven Position (2) einen vergleichsweise kleineren, düsenförmigen Strömungsquerschnitt (6) hinter der Düse (5) reaslisiert.

2. Injektorventil gemäß Anspruch 1, **dadurch gekennzeichnet, dass** der Ventilkörper (24) in der aktiven Position (II) einen düsenförmigen Querschnitt (6) mit sich anschließendem Diffusor (7) hinter der Düse (5) realisiert.

3. Injektorventil gemäß einem der Ansprüche 1 oder 2, **dadurch gekennzeichnet, dass** die Düse (5) zum Injizieren des Ergänzungsmediums in den Strömungskanal (1) als Lavaldüse ausgebildet ist.

4. Injektorventil gemäß einem der Ansprüche 1 bis 3, **dadurch gekennzeichnet, dass** der Ventilkörper (24) den düsenförmigen Querschnitt (6) und insbesondere den Diffusor (7) zusammen mit einer inneren Oberfläche (27) des Gehäuses (22) begrenzt.

5. Injektorventil gemäß einem der Ansprüche 1 bis 4, **dadurch gekennzeichnet, dass** der Ventilkörper (24) als Kugel, insbesondere als Hohlkugel (2) ausgeführt ist.

6. Injektorventil gemäß einem der Ansprüche 1 bis 5, **dadurch gekennzeichnet, dass** das Gehäuse (22) den Strömungskanal (1), der sich entlang einer Gehäuselängsachse (28) von einem ersten Einlass (23) zu dem Auslass (25) erstreckt, in Umfangsrichtung mit seiner inneren Oberfläche (27) begrenzt, und der Ventilkörper (24) innerhalb des Gehäuses (22) verschiebbar, insbesondere insgesamt verschiebbar, entlang der Gehäuselängsachse (28) gelagert ist.

7. Injektorventil gemäß Anspruch 6, **dadurch gekennzeichnet, dass** innerhalb des Gehäuses (22), insbesondere entlang der Gehäuselängsachse (28), ein Gleitsteg, insbesondere in Form einer in jeweils einer Nabe (17) In dem ersten Einlass (23) und dem Auslass (25) gehaltenen Zentralschraube (18), vorgesehen ist, auf welchem der Ventilkörper (24), vorteilhaft unter Zwischenschaltung einer Gleithülse (19), gleitend gelagert ist.

8. Injektorventil gemäß einem der Ansprüche 1 bis 7, **dadurch gekennzeichnet, dass** die Düse (5) zum Injizieren des Ergänzungsmediums, der düsenförmige Querschnitt (6) und/oder der Diffusor (7) eine Ringform oder Kreisringform aufwelst/aufweisen.

9. Injektorventil gemäß einem der Ansprüche 6 bis 8, **dadurch gekennzeichnet, dass** der Strömungskanal (1) in seinem Außendurchmesser im Bewegungsbereich des Ventilkörpers (24) gegenüber seinen beiden axialen Enden, von denen das eine durch den ersten Einlass (23) und das zweite durch den Auslass (25) gebildet wird, erweitert ist,

10. Injektorventil gemäß einem der Ansprüche 1 bis 9, **dadurch gekennzeichnet, dass** zwischen dem zweiten Einlass (3), der insbesondere senkrecht oder im Wesentlichen senkrecht zur Gehäuselängsachse (28) ausgerichtet ist, und der Düse (5) eine das Ergänzungsmedium über dem Umfang des Strömungskanals (1) verteilende Ringkammer (4) vorgesehen ist.

11. Injektorventil gemäß einem der Ansprüche 1 bis 10, **dadurch gekennzeichnet, dass** der Strömungskanal (1) einen kreisförmigen Querschnitt aufweist und der Ventilkörper (24) rotationssymmetrisch zur Längsachse des Strömungskanals (1) ist, welche insbesondere mit der Gehäuselängsachse (28) zusammenfällt.

12. Injektorventil gemäß einem der Ansprüche 1 bis 11, **dadurch gekennzeichnet, dass** der Ventilkörper (24) mittels eines Aktuators, insbesondere in Form einer elektromagnetischen Spule (8), aus seiner inaktiven Position (I) In seine aktive Position (II) und/oder umgekehrt verbringbar ist.

13. Injektorventil gemäß einem der Ansprüche 1 bis 12, **dadurch gekennzeichnet, dass** der Ventilkörper (24) auch oder ausschließlich durch den Druckaufbau im Strömungskanal (1) beim Injizieren des Ergänzungsmediums In den Strömungskanal (1) aus seiner inaktiven Position (I) in seine aktive Position (II) verbringbar ist.

14. Injektorventil gemäß einem der Ansprüche 1 bis 13, **dadurch gekennzeichnet, dass** ein Signalgeber, insbesondere in Form eines ein elektrisches Signal erzeugenden Kontaktes (10), vorgesehen ist, welcher ein Signal abgibt, sobald der Ventilkörper (24) aus seiner aktiven Position (II) in seine inaktive Position (I) verbracht wurde.

15. Aufladesystem für eine Brennkraftmaschine (30), insbesondere für ein Kraftfahrzeug, umfassend einen Abgasturbolader mit einer in einem Abgasstrom (31) der Brennkraftmaschine (30) angeordneten, vom Abgas in eine Drehbewegung versetzbaren Turbine (32) und einem in einem Frischluftstrom (33) zur Brennkraftmaschine (30) angeordneten Verdichter (34), der durch die Turbine (32) antreibbar ist, um den Frischluftstrom (33) zu verdichten,
und mit einer im Frischluftstrom (33) vor oder hinter dem Verdichter (34) mündenden Druckluftzufuhr (35), insbesondere aus einem Fahrzeugdruckluftsystem (36), um die Brennkraftmaschine (30) zusätzlich mit Druckluft aufzuladen,
**dadurch gekennzeichnet, dass**
an der Mündungsstelle der Druckluftzufuhr (35) im Frischluftstrom (33) ein Injektorventil (29) gemäß einem der Ansprüche 1 bis 14 vorgesehen Ist, wobei der Frischluftstrom (33) In den ersten Einlass (23) eingeleitet wird, die Druckluftzufuhr (35) am zweiten Einlass (3) angeschlossen ist, und der Frischluftstrom (33) sowie die als Ergänzungsmedium injizierte Druckluft über dem Auslass (25) aus dem Injektorventil (29) in Richtung zur Brennkraftmaschine (30) abgeführt werden.
